# EUROPEAN PATENT APPLICATION

(11) **EP 4 841 694 A1**
(43) Date of publication of application: **18.11.2026**
(21) Application number: 24916586.1
(22) Date of filing: 26.11.2024
(51) Int. Cl.: H01M 4/36

(54) **POSITIVE ELECTRODE MATERIAL AND PREPARATION METHOD THEREFOR, POSITIVE ELECTRODE SHEET, BATTERY AND ELECTRIC DEVICE**

(30) Priority: 11.01.2024 CN 202410043846
(71) Applicant: Contemporary Amperex Technology Co., Limited, Ningde, Fujian 352100 (CN); Hunan Yuneng New Energy Battery Materials Co., Ltd., Xiangtan, Hunan 411202 (CN)
(72) Inventor: BIE, Changfeng, Ningde, Fujian 352100 (CN); CHEN, Tao, Ningde, Fujian 352100 (CN); LI, Xiaojing, Ningde, Fujian 352100 (CN); LENG, Xue, Ningde, Fujian 352100 (CN); LIU, Hongyu, Ningde, Fujian 352100 (CN); HE, Siyuan, Ningde, Fujian 352100 (CN); NI, Huan, Ningde, Fujian 352100 (CN); WANG, Yuelin, Ningde, Fujian 352100 (CN)
(74) Representative: Gong, Jinping
(86) International application number: PCT/CN2024/134460
(87) International publication number: WO 2025/148536

(57) **Abstract**

This application provides a positive electrode material, a preparation method of a positive electrode material, a positive electrode sheet, a battery, and an electric apparatus. The positive electrode material of this application includes a core and a coating layer covering the core. The core includes lithium iron phosphate or lithium iron phosphate containing M element. The coating layer includes carbon and optional M element. The positive electrode material satisfies: a powder resistivity at 8 MPa is less than or equal to 20 Ω·cm; and a BET specific surface area at a liquid nitrogen temperature is 6-15.2 m²/g. The positive electrode material of this application has few side reactions and improves the cycling performance of the battery.

## Description

This application is based on and claims the priority to the Chinese Patent Application No. 202410043846.7, filed on January 11, 2024, which is incorporated herein by reference in its entirety.

### TECHNICAL FIELD

This application relates to the field of lithium battery technology, and in particular, to a positive electrode material, a preparation method of the positive electrode material, a positive electrode sheet, a battery, and an electric apparatus.

### BACKGROUND

In recent years, with increasingly wide use of secondary batteries, secondary batteries have been widely used in energy storage power supply systems such as hydroelectric, thermal, wind, and solar power plants, and many fields including electric tools, electric bicycles, electric motorcycles, electric vehicles, military equipment, and aerospace. Due to the great development of secondary batteries, higher requirements have also been placed on their cycling performance.

### SUMMARY

This application has been made in view of the above issues and aims to provide a positive electrode material, a preparation method of the positive electrode material, a positive electrode sheet, a battery, and an electric apparatus. The positive electrode material of this application has few side reactions and less loss of active lithium, thereby improving the cycling performance of the battery.

To achieve the above objective, according to a first aspect of this application, a positive electrode material is provided, including a core and a coating layer covering the core, where the core includes lithium iron phosphate or lithium iron phosphate containing M element, and the coating layer includes carbon or includes carbon and M element; where M element in the core and the coating layer independently includes one or more elements of Group IIA, Group IIIA, Group IVA, Group IVB, and Group VB, optionally including one or more elements of Si, Al, B, Mg, Zr, Ti, Nb, and V; and
the positive electrode material satisfies:
a powder resistivity at 8 MPa is less than or equal to 20 Ω·cm; and
a BET specific surface area at a liquid nitrogen temperature is 6-15.2 m²/g.

The positive electrode material of this application has both a low water absorption rate and a small water absorption contact area, which reduces the water absorption of the positive electrode material, and reduces side reactions between water in the positive electrode material and an electrolyte, thereby improving the cycling performance of the battery.

In any embodiment, the powder resistivity of the positive electrode material at 8 MPa is less than or equal to 10 Ω·cm; and/or
the BET specific surface area of the positive electrode material at the liquid nitrogen temperature is 8-11 m²/g.

In any embodiment, the iron dissolution amount of the positive electrode material per gram in 100 mL hydrochloric acid solution is less than or equal to 60 ppm; and/or
a polydispersity index PDI value of a primary particle size distribution of the positive electrode material is less than or equal to 0.87.

In any embodiment, the iron dissolution amount of the positive electrode material per gram in 100 mL hydrochloric acid solution is less than or equal to 55 ppm; and/or
the polydispersity index PDI value of the primary particle size distribution of the positive electrode material is less than or equal to 0.4.

The iron dissolution amount of the positive electrode material of this application satisfies the above range, which can mitigate the precipitation of iron on a negative electrode and the damage to the formed SEI film, thereby improving the cycling performance of the battery.

The polydispersity index PDI of the primary particle size distribution of the positive electrode material of this application satisfies the above range, which helps to control the concentration and uniformity of the primary particle size of the positive electrode material, reduces the precipitation of small-particle metal ions, and/or reduces side reactions between large particles after crushed and the electrolyte, thereby improving the cycling performance of the battery.

In any embodiment, a weight percentage of carbon in the positive electrode material is 1.2%-2.0%; and/or
a weight percentage of M element in the positive electrode material is 297 ppm-10⁴ ppm.

In any embodiment, a weight percentage of M element in the positive electrode material is 10³ ppm-10⁴ ppm.

Thus, this helps to obtain a coating layer with a small thickness, good integrity, a high density, a high uniformity, and a high graphitization degree, thereby improving the cycling performance of the battery.

In any embodiment, a particle size Dᵥ50 of the positive electrode material is 0.6-1.5 µm; and/or
a compacted density of the positive electrode material at 221.55 MPa is greater than or equal to 2.3 g/cm³.

Thus, this helps to obtain a positive electrode sheet with a high density and a high compacted density.

According to a second aspect of this application, a method for preparing a positive electrode material is further provided, including:
performing ball milling and sand milling on an iron source, a lithium source, a phosphorus source, an organic carbon source, and an inorganic carbon source in a solvent to obtain a mixture; and
drying and sintering the mixture to obtain a positive electrode material; where
the positive electrode material is the positive electrode material according to the first aspect of this application.

Thus, in this application, the above raw materials are used in combination with the operations such as ball milling, sand milling, and sintering, and doping elements are optionally added to the coating layer, so that the powder resistivity and BET specific surface area of the positive electrode material satisfy the above ranges, allowing the prepared positive electrode material to have both a low water absorption rate and a small water absorption contact area, reducing the water absorption of the positive electrode material, and reducing side reactions between water in the positive electrode material and the electrolyte, thereby improving the cycling performance of the battery.

In any embodiment, the organic carbon source includes a small-molecule organic carbon source and a medium-molecule organic carbon source, or includes a small-molecule organic carbon source and a macromolecular organic carbon source.

In any embodiment, a weight ratio of the small-molecule organic carbon source to the medium-molecule organic carbon source or a weight ratio of the small-molecule organic carbon source to the macromolecular organic carbon source is (1:9) to (9:1); and/or
a weight-average molecular weight of the medium-molecule organic carbon source is greater than 500 and less than or equal to 2000; and/or
a weight-average molecular weight of the macromolecular organic carbon source is greater than 2000 and less than or equal to 1000000; and/or
the inorganic carbon source includes one or more of acetylene black, Ketjen black, graphite oxide, graphene, and carbon nanotubes.

Thus, this helps to form a coating layer with good density and good integrity, thereby reducing the iron dissolution amount and powder resistivity of the positive electrode material. The inorganic carbon source acts as a supporting skeleton during a carbonization process of the organic carbon source, which can improve the uniformity and integrity of a film formed by carbon.

In any embodiment, the organic carbon source includes one or more of glucose, sucrose, fructose, citric acid, starch, polyvinyl alcohol, polyethylene glycol, and polyaniline.

In any embodiment, in the step of preparing the mixture, the iron source, the lithium source, the phosphorus source, the organic carbon source, the inorganic carbon source, and a source of M element are ball-milled and sand-milled in the solvent to obtain the mixture.

In any embodiment, a weight ratio of the inorganic carbon source to the iron element in the iron source is (1:50) to (1:345).

In any embodiment, a particle size Dᵥ50 of insoluble particles in the mixture is 0.40-0.85 µm; and/or
a temperature of the sand milling is 25°C-35°C; and/or
a time of the sand milling is 0.5-4 hours; and/or
the sand milling is performed at a rotation speed of 5000-10000 rpm.

Thus, this helps to improve the uniformity of the primary particle size distribution of the positive electrode material, improve the concentration and uniformity of positive electrode material particles, reduce the precipitation of small-particle metal ions and/or side reactions between large particles after crushed and the electrolyte, and improve the cycling performance of the battery.

In any embodiment, the method further includes: before sintering, granulating the dried mixture to obtain particles, where an average particle size of the particles is 2 mm-10 mm; and/or
the method further includes: after sintering, crushing a sintered product to obtain a positive electrode material. Thus, this helps to improve the uniformity of the primary particle size distribution of the positive electrode material.

In any embodiment, after drying or after granulation, the temperature is raised to a sintering temperature at a constant rate in 2.5-9 hours; and/or
the sintering temperature is 600°C-800°C; and/or
a time of the sintering is 5-10 hours; and/or
the temperature is raised and the sintering is performed in a reducing atmosphere; and/or
a volume percentage of a reducing gas in the reducing atmosphere is 2%-8%.

Thus, this facilitates the sufficient cracking and carbonization of the organic carbon source to obtain an ultra-thin coating layer with a high degree of graphitization. In addition, this helps to improve the uniformity of the coating layer and reduce the problem of metal ion dissolution caused by uneven or incomplete coating.

In any embodiment, a molar ratio of the iron element in the iron source to the phosphorus element in the phosphorus source is 0.96-0.98; and/or
a molar ratio of the lithium element in the lithium source to the iron element in the iron source is 1.015-1.045; and/or
a molar ratio of M element to the iron element in the iron source is (1:1000) to (3:100); and/or
a particle size Dᵥ50 of insoluble particles in a ball-milled material is 2.0-5.0 µm.

According to a third aspect of this application, a positive electrode sheet is provided, including the positive electrode material according to the first aspect of this application or a positive electrode material prepared using the method according to the second aspect of this application.

According to a fourth aspect of this application, a battery is provided, including the positive electrode material according to the first aspect of this application, a positive electrode material prepared using the method according to the second aspect of this application, or the positive electrode sheet according to the third aspect of this application.

According to a fifth aspect of this application, an electric apparatus is provided, including the battery according to the fourth aspect of this application.

### BRIEF DESCRIPTION OF DRAWINGS

FIG. 1 is a schematic diagram of a battery cell according to an embodiment of this application.
FIG. 2 is an exploded view of the battery cell according to an embodiment of this application shown in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to an embodiment of this application shown in FIG. 4.
FIG. 6 is a schematic diagram of an electric apparatus using a battery cell according to an embodiment of this application as a power source.
FIG. 7 is an SEM image of a positive electrode material of Example 1 of this application.

Description of reference signs:
1. battery pack; 2. upper box body; 3. lower box body; 4. battery module; 5. battery cell; 51. housing; 52. electrode assembly; and 53. top cover assembly.

### DESCRIPTION OF EMBODIMENTS

Embodiments that specifically disclose a positive electrode material and a preparation method thereof, a positive electrode sheet, a negative electrode sheet, a battery cell, a battery module, a battery pack, and an electric apparatus of this application are described in detail below with appropriate reference to the accompanying drawings. However, there may be cases where unnecessary detailed descriptions are omitted. For example, detailed descriptions of well-known matters and repeated descriptions of substantially the same structures may be omitted. This is to avoid the following description from becoming unnecessarily lengthy and to facilitate the understanding by those skilled in the art. In addition, the accompanying drawings and the following descriptions are provided for those skilled in the art to fully understand this application, and are not intended to limit the subject matter described in the claims.

"Ranges" disclosed in this application are defined in the form of lower and upper limits. A given range is defined by one lower limit and one upper limit selected, where the selected lower and upper limits define boundaries of that particular range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if lower limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise specified, a value range of "a-b" is a short representation of any combination of real numbers between a and b, where both a and b are real numbers. For example, a value range of "0-5" means that all real numbers in the range of "0-5" are listed herein, and "0-5" is just an abbreviated representation of a combination of these numbers. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise stated, all the embodiments and optional embodiments of this application can be combined with each other to form new technical solutions.

Unless otherwise stated, all technical features and optional technical features of this application can be combined with each other to form new technical solutions.

Unless otherwise stated, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise stated, a particle size Dᵥ50 in this application refers to a particle size when a volume distribution cumulative value is 50%.

### [Battery cell]

A battery cell, also called a rechargeable battery or a storage battery, refers to a battery whose active material can be activated for continuous use through charging after the battery is discharged.

Typically, a battery cell includes a positive electrode sheet, a negative electrode sheet, a separator, and an electrolyte. During charging and discharging of a battery, active ions (such as lithium ions) are intercalated and deintercalated back and forth between the positive electrode sheet and the negative electrode sheet. The separator is disposed between the positive electrode sheet and the negative electrode sheet to mainly prevent short circuits between positive and negative electrodes and to allow the active ions to pass through. The electrolyte is located between the positive electrode sheet and the negative electrode sheet to mainly conduct active ions.

### [Positive electrode material]

An embodiment of this application provides a positive electrode material including a core and a coating layer covering the core, where the core includes lithium iron phosphate or lithium iron phosphate containing M element, and the coating layer includes carbon or includes carbon and M element; where the M element in the core and the coating layer independently includes one or more elements of Group IIA, Group IIIA, Group IVA, Group IVB, and Group VB, optionally including one or more elements of Si, Al, B, Mg, Zr, Ti, Nb, and V; and
the positive electrode material satisfies:
a powder resistivity at 8 MPa is less than or equal to 20 Ω·cm, optionally less than or equal to 19 Ω·cm or less than or equal to 18 Ω·cm, for example 0.01 Ω·cm, 0.05 Ω·cm, 0.1 Ω·cm, 0.5 Ω·cm, 1 Ω·cm, 2 Ω·cm, 4 Ω·cm, 5 Ω·cm, 7 Ω·cm, 8 Ω·cm, 9 Ω·cm, 10 Ω·cm, 12 Ω·cm, 14 Ω·cm, 15 Ω·cm, 16 Ω·cm, 18 Ω·cm, 20 Ω·cm, a range with any of the above values as an upper limit, or a range defined by any of the above values; and
a BET specific surface area at liquid nitrogen temperature of 6-15.2 m²/g, for example 6 m²/g, 7 m²/g, 8 m²/g, 9 m²/g, 10 m²/g, 11 m²/g, 12 m²/g, 13 m²/g, 14 m²/g, 15 m²/g, 15.2 m²/g, or a range defined by any of the above values.

The inventors of this application have found through research that the main mechanism of cycling performance degradation of a battery using an iron-based polyanionic phosphate positive electrode material includes: after the surface of the positive electrode material absorbs water, water undergoes side reactions with the electrolyte to generate hydrofluoric acid, and hydrogen ions destroy the SEI film on a surface of the negative electrode or react with lithium on the surface of the negative electrode, thus causing cycling performance degradation.

Although the mechanism is not yet clear, the applicants have unexpectedly found that:
the positive electrode material of this application with the powder resistivity satisfying the above range has a dense and highly graphitized coating layer, which helps to reduce a water absorption rate of the positive electrode material. The BET specific surface area of the positive electrode material of this application is within the above range, which helps to reduce the water absorption contact area of the positive electrode material. Therefore, the positive electrode material of this application has both a low water absorption rate and a small water absorption contact area, which reduces the water absorption of the positive electrode material, and reduces side reactions between water in the positive electrode material and the electrolyte, thereby improving the cycling performance of the battery.

In some embodiments, the core includes Li₁₊ₑM_{f}FeₐPO₄, where 0≤e<0.1 (for example, 0, 0.001, 0.003, 0.005, 0.007, 0.008, 0.009, 0.01, 0.02, 0.04, 0.05, 0.07, 0.08, 0.09, 0.095, or a range defined by any of the above values); 0≤f≤0.05 (for example, 0, 0.001, 0.003, 0.005, 0.007, 0.008, 0.009, 0.01, 0.02, 0.04, 0.05, or a range defined by any of the above values); 0.95≤a≤1 (for example, 0.95, 0.96, 0.97, 0.98, 0.99, 1, or a range defined by any of the above values); and M element includes one or more elements of Group IIA, Group IIIA, Group IVA, Group IVB, and Group VB, optionally including one or more elements of Si, Al, B, Mg, Zr, Ti, Nb, and V.

In some embodiments, the powder resistivity of the positive electrode material at 8 MPa is less than or equal to 10 Ω·cm; and
the BET specific surface area of the positive electrode material at liquid nitrogen temperature is 8-11 m²/g.

In some embodiments, an iron dissolution amount of the positive electrode material per gram in 100 mL hydrochloric acid solution is less than or equal to 60 ppm, optionally less than or equal to 55 ppm, and more optionally less than or equal to 15 ppm, for example, 5 ppm, 10 ppm, 15 ppm, 17 ppm, 20 ppm, 22 ppm, 25 ppm, 27 ppm, 30 ppm, 33 ppm, 36 ppm, 39 ppm, 40 ppm, 42 ppm, 45 ppm, 47 ppm, 50 ppm, 53 ppm, 55 ppm, 57 ppm, 58 ppm, 59 ppm, 60 ppm, a range with any of the above values as an upper limit, or a range defined by any of the above values; and/or
a polydispersity index PDI value of primary particle size distribution of the positive electrode material is less than or equal to 0.87, optionally less than or equal to 0.4, for example, 0.1, 0.15, 0.2, 0.25, 0.3, 0.35, 0.4, 0.45, 0.5, 0.6, 0.7, 0.75, 0.8, 0.85, 0.87, a range with any of the above values as an upper limit, or a range defined by any of the above values.

The iron dissolution amount of the positive electrode material of this application satisfies the above range, which can mitigate the precipitation of iron on a negative electrode and the damage to the formed SEI film, thereby improving the cycling performance of the battery.

The polydispersity index PDI of the primary particle size distribution of the positive electrode material of this application satisfies the above range, which helps to control the concentration and uniformity of the primary particle size of the positive electrode material, reduces the precipitation of small-particle metal ions, and/or reduces side reactions between large particles after crushed and the electrolyte.

In some embodiments, a weight percentage of carbon in the positive electrode material is 1.2%-2.0%, for example, 1.2%, 1.3%, 1.4%, 1.5%, 1.6%, 1.7%, 1.8%, 1.9%, 2.0%, or a range defined by any of the above values; and/or
a weight percentage of M element in the positive electrode material is 297 ppm-10⁴ ppm, optionally 10³ ppm-10⁴ ppm or 297 ppm-2.5×10³ ppm, and more optionally 2×10³ ppm-6×10³ ppm, for example, 297 ppm, 350 ppm, 400 ppm, 500 ppm, 600 ppm, 700 ppm, 800 ppm, 1000 ppm, 1100 ppm, 1200 ppm, 1500 ppm, 1700 ppm, 2000 ppm, 2200 ppm, 2500 ppm, 3000 ppm, 4000 ppm, 5000 ppm, 7000 ppm, 9000 ppm, 10⁴ ppm, or a range defined by any of the above values.

Thus, this helps to obtain a coating layer with a small thickness, good integrity, a high density, a high uniformity, and a high graphitization degree, thereby improving the cycling performance of the battery.

In some embodiments, a particle size Dᵥ50 of the positive electrode material is 0.6-1.5 µm, for example, 0.6 µm, 0.7 µm, 0.8 µm, 0.9 µm, 1.0 µm, 1.1 µm, 1.2 µm, 1.3 µm, 1.4 µm, 1.5 µm, or a range defined by any of the above values; and/or
a compacted density of the positive electrode material at 221.55 MPa is greater than or equal to 2.3 g/cm³, optionally 2.3-2.6 g/cm³, for example, 2.3 g/cm³, 2.4 g/cm³, 2.5 g/cm³, 2.6 g/cm³, or a range defined by any of the above values.

Thus, this helps to obtain a positive electrode sheet with a high density and a high compacted density.

In this application, the powder resistivity can be tested using conventional methods in the art. For example, the powder resistivity is tested with reference to the national standard GB/T 33822-2017. Specifically, a powder resistivity meter can be used to test a sample, a pressure of 8 MPa is applied, a forward resistivity and reverse resistivity of the sample are tested respectively, and an average value of the two is taken as a powder resistivity of the sample.

In this application, the BET specific surface area can be tested using conventional methods in the art. For example, the BET specific surface area is tested with reference to the national standard GB/T 19587-2017. Specifically, a specific surface area analyzer can be used for testing. A special sample tube is used to load a sample, followed by heating, vacuum pumping, and degassing. Then, the sample tube containing the sample is placed in a workstation, where an adsorption gas is nitrogen, and the testing atmosphere is high-purity liquid nitrogen. An adsorption amount of gas on a solid surface under different relative adsorption pressures is tested. Then, the analyzer automatically calculates the BET specific surface area based on the BET multilayer adsorption theory and formula.

In this application, the polydispersity index PDI value of the primary particle size distribution can be tested using conventional methods in the art. For example, an argon ion beam is used to cut perpendicular to the surface of the positive electrode sheet, a cross section is photographed with a scanning electron microscope, particle sizes of primary particles with a particle size greater than 50 nm are statistically analyzed, and the PDI is calculated according to the following formula; where an average particle size *x̅* is the sum of particle sizes of primary particles divided by the number of primary particles.$PDI = σ / \overline{x}$$σ = \sqrt{\frac{{\sum }_{i = 1}^{n} {\left({x}_{i}-\overline{x}\right)}^{2}}{n}}$

*σ* is the standard deviation of the particle size, *x̅* is the average particle size, *xᵢ* is the particle size value of the primary particles, and n is the total number of primary particles counted.

In this application, the iron dissolution amount of the positive electrode material per gram in 100 mL hydrochloric acid solution (0.01 mol/L) can be tested using conventional methods in the art. For example, a dilute hydrochloric acid solution (0.01 mol/L) is added to the positive electrode material, sealed, and stirred, then sealed and left standing at room temperature, the supernatant is filtered, a concentration of Fe element in the filtrate is tested with ICP-OES, and the iron dissolution amount of the positive electrode material per gram in 100 mL hydrochloric acid solution is calculated.

In this application, the particle size Dᵥ50 can be tested using conventional methods in the art. For example, the material is added to deionized water such that a sample is completely dispersed, and a sample concentration ensures that a light obscuration is 8-12%. A laser particle size analyzer is used to test the particle size Dᵥ50 of the material.

In this application, the compacted density can be tested using conventional methods in the art. For example, sample powder is placed in a compacted density mold, and the compacted density mold is then placed in a compacted density machine. A compacted density is tested after compacting with a certain pressure.

### [Method for preparing positive electrode material]

An embodiment of this application provides a method for preparing a positive electrode material, including:
performing ball milling and sand milling on an iron source, a lithium source, a phosphorus source, an organic carbon source, and an inorganic carbon source in a solvent to obtain a mixture; and
drying and sintering the mixture to obtain a positive electrode material; where
the positive electrode material is the above positive electrode material.

Thus, in this application, the above raw materials are used in combination with the operations such as ball milling, sand milling, and sintering, and doping elements are optionally added to the coating layer, so that the powder resistivity and BET specific surface area of the positive electrode material satisfy the above ranges, allowing the prepared positive electrode material to have both a low water absorption rate and a small water absorption contact area, reducing the water absorption of the positive electrode material, and reducing side reactions between water in the positive electrode material and the electrolyte, thereby improving the cycling performance of the battery.

In some embodiments, the organic carbon source includes a small-molecule organic carbon source and a medium-molecule organic carbon source, or includes a small-molecule organic carbon source and a macromolecular organic carbon source.

In some embodiments, a weight ratio of the small-molecule organic carbon source to the medium-molecule organic carbon source or a weight ratio of the small-molecule organic carbon source to the macromolecular organic carbon source is (1:9) to (9:1), more optionally (1:8) to (2:1), for example, 1:9, 1:8, 1:7, 1:6, 1:5, 1:4, 1:3, 1:2, 1:1, 2:1, 3:1, 4:1, 5:1, 6:1, 7:1, 8:1, 9:1, or a range defined by any of the above values; and/or
a molar mass of the small-molecule organic carbon source is less than or equal to 500 g/mol; and/or
a weight-average molecular weight of the medium-molecule organic carbon source is greater than 500 and less than or equal to 2000; and/or
a weight-average molecular weight of the macromolecular organic carbon source is greater than 2000 and less than or equal to 1000000; and/or
the inorganic carbon source includes one or more of acetylene black, Ketjen black, graphite oxide, graphene, and carbon nanotubes.

Thus, this helps to form a coating layer with good density and good integrity, thereby reducing the iron dissolution amount and powder resistivity of the positive electrode material.

In some embodiments, the organic carbon source includes one or more of glucose, sucrose, fructose, citric acid, starch, polyvinyl alcohol, polyethylene glycol, and polyaniline.

In some embodiments, in the step of preparing the mixture, the iron source, the lithium source, the phosphorus source, the organic carbon source, the inorganic carbon source, and a source of M element are ball-milled and sand-milled in the solvent to obtain the mixture.

In some embodiments, the core includes Li₁₊ₑM_{f}FeₐPO₄, where 0≤e<0.1 (for example, 0, 0.001, 0.003, 0.005, 0.007, 0.008, 0.009, 0.01, 0.02, 0.04, 0.05, 0.07, 0.08, 0.09, 0.095, or a range defined by any of the above values); 0≤f≤0.05 (for example, 0, 0.001, 0.003, 0.005, 0.007, 0.008, 0.009, 0.01, 0.02, 0.04, 0.05, or a range defined by any of the above values); 0.95≤a≤1 (for example, 0.95, 0.96, 0.97, 0.98, 0.99, 1, or a range defined by any of the above values); and M element includes one or more elements of Group IIA, Group IIIA, Group IVA, Group IVB, and Group VB, optionally including one or more elements of Si, Al, B, Mg, Zr, Ti, Nb, and V.

In some embodiments, a weight ratio of the inorganic carbon source to the iron element in the iron source is (1:50) to (1:345), optionally (1:50) to (1:200), and more optionally (1:50) to (1:172.5), for example, 1:50, 1:60, 1:70, 1:80, 1:90, 1:100, 1:110, 1:119, 1:120, 1:130, 1:132.7, 1:140, 1:150, 1:160, 1:170, 1:172.5, 1:180, 1:190, 1:200, 1:210, 1:215, 1:216, 1:220, 1:230, 1:240, 1:250, 1:260, 1:270, 1:280, 1:290, 1:300, 1:310, 1:320, 1:330, 1:340, 1:345, or a range defined by any of the above values.

In some embodiments, a particle size Dᵥ50 of insoluble particles in the mixture is 0.40-0.85 µm, for example, 0.4 µm, 0.5 µm, 0.6 µm, 0.7 µm, 0.8 µm, 0.85 µm, or a range defined by any of the above values; and/or
a temperature of the sand milling is 25°C-35°C, for example, 25°C, 27°C, 30°C, 32°C, 35°C, or a range defined by any of the above values; and/or
a time of the sand milling is 0.5-4 hours, for example, 0.5 hours, 1 hour, 1.5 hours, 2 hours, 2.5 hours, 3 hours, 3.5 hours, 4 hours, or a range defined by any of the above values; and/or
the sand milling is performed at a rotation speed of 5000-10000 rpm, for example, 5000 rpm, 6000 rpm, 7000 rpm, 8000 rpm, 9000 rpm, 10000 rpm, or a range defined by any of the above values.

Thus, this helps to improve the uniformity of the primary particle size distribution of the positive electrode material, improve the concentration and uniformity of the positive electrode material particles, reduce the precipitation of small-particle metal ions and/or side reactions between large particles after crushed and the electrolyte, and improve the cycling performance of the battery.

In some embodiments, before sintering, the dried mixture is granulated to obtain particles, where an average particle size of the particles is 2 mm-10 mm, for example, 2 mm, 4 mm, 6 mm, 8 mm, 1cm, or a range defined by any of the above values; and/or
after sintering, a sintered product is crushed to obtain a positive electrode material.

Thus, this helps to improve the uniformity of the primary particle size distribution of the positive electrode material.

In some embodiments, after drying or after granulation, the temperature is raised to the sintering temperature at a constant rate in 2.5-9 hours and optionally raised to the sintering temperature at a constant rate in 3-9 hours. For example, the temperature is raised to the sintering temperature at a constant rate within a time of 2.5 hours, 3 hours, 3.5 hours, 4 hours, 4.5 hours, 5 hours, 5.5 hours, 6 hours, 6.5 hours, 7 hours, 7.5 hours, 8 hours, 8.5 hours, 9 hours, or a range defined by any of the above values; and/or
the sintering temperature is 600°C-800°C, for example, 600°C, 620°C, 650°C, 670°C, 700°C, 720°C, 750°C, 770°C, 790°C, 800°C, or a range defined by any of the above values; and/or
a time of the sintering is 5-10 hours, for example, 5 hours, 6 hours, 7 hours, 8 hours, 9 hours, 10 hours, or a range defined by any of the above values; and/or
the temperature is raised and the sintering is performed in a reducing atmosphere; and/or
a volume percentage of a reducing gas in the reducing atmosphere is 2%-8%, for example, 2%, 3%, 4%, 5%, 6%, 7%, 8%, or a range defined by any of the above values.

Thus, this facilitates the sufficient cracking and carbonization of the organic carbon source to obtain an ultra-thin coating layer with a high degree of graphitization. In addition, this helps to improve the uniformity of the coating layer and reduce the problem of metal ion dissolution caused by uneven or incomplete coating.

In some embodiments, a molar ratio of the iron element in the iron source to the phosphorus element in the phosphorus source is 0.96-0.98, for example, 0.95, 0.97, 0.98, or a range defined by any of the above values; and/or
a molar ratio of the lithium element in the lithium source to the iron element in the iron source is 1.015-1.045, for example, 1.015, 1.018, 1.02, 1.025, 1.03, 1.035, 1.04, 1.045, or a range defined by any of the above values; and/or
a molar ratio of M element to the iron element in the iron source is (1:1000) to (3:100), optionally (2:1000) to (3:100), for example, 1:1000, 1:900, 1:800, 1:700, 1:600, 1:500, 1:400, 1:300, 1:200, 1:100, 2:100, 3:100, or a range defined by any of the above values; and/or
a particle size Dᵥ50 of insoluble particles in a ball-milled material is 2.0-5.0 µm, for example, 2.0 µm, 3.0 µm, 4.0 µm, 5.0 µm, or a range defined by any of the above values.

In some embodiments, the iron source includes one or more of oxides, hydroxides, elemental substances, and salts of the iron element, optionally including one or more of iron phosphate, iron oxide, ferrous oxalate, iron powder, and iron nitrate; and/or
the lithium source includes one or more of oxides, hydroxides, elemental substances, and salts of the lithium element, optionally including one or more of lithium dihydrogen phosphate, lithium monohydrogen phosphate, lithium nitrate, lithium carbonate, lithium phosphate, lithium hydroxide, and lithium acetate; and/or
the phosphorus source includes one or more of acids and salts of the phosphorus element, optionally including one or more of ammonium dihydrogen phosphate, ammonium phosphate, lithium phosphate, phosphoric acid, and iron phosphate; and/or
the source of M element includes one or more of oxides, hydroxides, elemental substances, and salts of M element; and/or
the solvent is water.

In some embodiments, a ratio of a total mass of the iron source, the lithium source, and the phosphorus source to a mass of the solvent is (1-3):(1-7), for example, 1:1, 1:2, 1:3, 1:4, 1:6, 1:7, 1.5:1, 2:1, 3:1, or a range defined by any of the above values.

In some embodiments, a temperature of the ball milling is 25-35°C, for example, 25°C, 30°C, 35°C, or a range defined by any of the above values; and/or
a time of the ball milling is 0.5-4 h, for example, 0.5 h, 1 h, 1.5 h, 2 h, 2.5 h, 3 h, 3.5 h, 4 h, or a range defined by any of the above values; and/or
the ball milling is performed at a rotation speed of 800-2000 rpm, for example, at a rotation speed of 800 rpm, 900 rpm, 1000 rpm, 1100 rpm, 1200 rpm, 1400 rpm, 1500 rpm, 1700 rpm, 1800 rpm, 1900 rpm, 2000 rpm, or a range defined by any of the above values.

In some embodiments, the drying is spray drying. Optionally, an inlet air temperature of the spray drying is 200°C-300°C, and an outlet air temperature is 90°C-120°C.

In some embodiments, the reducing gas is carbon monoxide and/or hydrogen.

In some embodiments, the reducing atmosphere further includes an inert gas. Optionally, the inert gas is nitrogen and/or argon.

In some embodiments, the crushing is performed by gas crushing.

### [Positive electrode sheet]

A positive electrode sheet typically includes a positive electrode current collector and a positive electrode film layer disposed on at least one surface of the positive electrode current collector, and the positive electrode film layer includes the foregoing positive electrode material.

During charging and discharging of the battery, intercalation, deintercalation, and consumption of Li is accompanied. A molar content of Li in the battery is different when the battery is discharged to different states. In the enumeration of the positive electrode material in this application, the molar content of Li is an initial state of the material, that is, the state before feeding. When the positive electrode material is applied to a battery system, the molar content of Li changes after charge and discharge cycles.

In the enumeration of the positive electrode material in this application, a molar content of O is only a theoretical state value. Lattice oxygen release causes the molar content of oxygen to change, and the actual molar content of O has fluctuation.

As an example, the positive electrode current collector has two opposite surfaces in its thickness direction, and the positive electrode film layer is disposed on either or both of the two opposite surfaces of the positive electrode current collector.

In some embodiments, the positive electrode current collector may use a metal foil or a composite current collector. For example, as a metal foil, an aluminum foil may be used. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), or polyethylene (PE)).

In some embodiments, the positive electrode material may further include positive electrode active materials for batteries known in the art. As an example, the positive electrode active material may include at least one of the following materials: lithium transition metal oxides and respective modified compounds thereof. However, this application is not limited to these materials, and other conventional materials that can be used as positive electrode active materials for batteries can also be used. These positive electrode active materials can be used alone or in combination of two or more. Examples of lithium transition metal oxides may include but are not limited to at least one of lithium cobalt oxide (such as LiCoO₂), lithium nickel oxide (such as LiNiO₂), lithium manganese oxide (such as LiMnO₂ or LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (which can also be referred to as NCM333), LiNi_{0.5}Co_{0.2}Mn_{0.3}O₂ (which can also be referred to as NCM523), LiNi_{0.5}Co_{0.25}Mn_{0.25}O₂ (which can also be referred to as NCM211), LiNi_{0.6}Co_{0.2}Mn_{0.2}O₂ (which can also be referred to as NCM622), LiNi_{0.8}Co_{0.1}Mn_{0.1}O₂ (which can also be referred to as NCM811)), lithium nickel cobalt aluminum oxide (such as LiNi_{0.85}Co_{0.15}Al_{0.05}O₂), and modified compounds thereof.

In some embodiments, the positive electrode film layer optionally further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer optionally further includes a conductive agent. As an example, the conductive agent may include at least one of superconducting carbon, acetylene black, carbon black, Ketjen black, carbon dots, carbon nanotubes, graphene, and carbon nanofiber.

In some embodiments, the positive electrode sheet can be prepared in the following method: The above components used for preparing the positive electrode sheet, such as the positive electrode material, the conductive agent, the binder, and any other components, are dispersed in a solvent (such as N-methylpyrrolidone) to form a positive electrode slurry. Then, the positive electrode slurry is applied on the positive electrode current collector, and processes such as drying and cold pressing are performed to obtain the positive electrode sheet.

### [Negative electrode sheet]

The negative electrode sheet includes a negative electrode current collector and a negative electrode film layer disposed on at least one surface of the negative electrode current collector, and the negative electrode film layer includes a negative electrode active material.

As an example, the negative electrode current collector has two opposite surfaces in its thickness direction, and the negative electrode film layer is disposed on either or both of the two opposite surfaces of the negative electrode current collector.

In some embodiments, the negative electrode current collector may use a metal foil or a composite current collector. For example, as a metal foil, a copper foil may be used. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), or polyethylene (PE)).

In some embodiments, the negative electrode active material may use negative electrode active materials for batteries known in the art. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, this application is not limited to these materials, and other conventional materials that can be used as negative electrode active materials for batteries can also be used. These negative electrode active materials can be used alone or in combination of two or more.

In some embodiments, the negative electrode film layer optionally further includes a binder. As an example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer optionally further includes a conductive agent. As an example, the conductive agent may be selected from at least one of superconducting carbon, acetylene black, carbon black, Ketjen black, carbon dots, carbon nanotubes, graphene, and carbon nanofiber.

In some embodiments, the negative electrode film layer optionally further includes another additive, such as a thickener (such as sodium carboxymethyl cellulose (CMC-Na)).

In some embodiments, the negative electrode sheet can be prepared in the following method: The above components used for preparing the negative electrode sheet, such as the negative electrode active material, the conductive agent, the binder, and any other components, are dispersed in a solvent (such as deionized water) to form a negative electrode slurry. Then, the negative electrode slurry is applied on the negative electrode current collector, and processes such as drying and cold pressing are performed to obtain the negative electrode sheet.

### [Electrolyte]

The electrolyte functions to conduct ions between the positive electrode sheet and the negative electrode sheet. This application does not have specific restrictions on the type of the electrolyte, and the electrolyte can be selected according to needs. For example, the electrolyte may be in a liquid state, a gel state, or an all-solid state.

In some embodiments, the electrolyte is in a liquid state and includes an electrolytic salt and a solvent.

In some embodiments, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte optionally further includes an additive. As an example, the additive may include a negative electrode film-forming additive and a positive electrode film-forming additive, and may further include an additive capable of improving some performance of the battery, such as an additive capable of improving overcharge performance of the battery or an additive capable of improving high-temperature or low-temperature performance of the battery.

### [Separator]

In some embodiments, the battery cell further includes a separator. This application does not have particular limitations on the type of the separator, and any known separator with a porous structure and good chemical stability and mechanical stability may be used.

In some embodiments, the material of the separator may be selected from at least one of glass fiber, nonwoven fabric, polyethylene, polypropylene, and polyvinylidene fluoride. The separator may be a single-layer film or a multi-layer composite film, which is not particularly limited. When the separator is a multi-layer composite film, the materials of layers may be the same or different, which is not particularly limited.

In some embodiments, the positive electrode sheet, the negative electrode sheet, and the separator may be made into an electrode assembly through a winding process or a lamination process.

In some embodiments, the battery cell may include an outer package. The outer package can be used for packaging the above electrode assembly and electrolyte.

In some embodiments, the outer package of the battery cell may be a hard shell, such as a hard plastic shell, an aluminum shell, or a steel shell. The outer package of the battery cell may alternatively be a soft pack, such as a soft pouch. The material of the soft package may be plastic. As the plastic, polypropylene, polybutylene terephthalate, and polybutylene succinate may be listed.

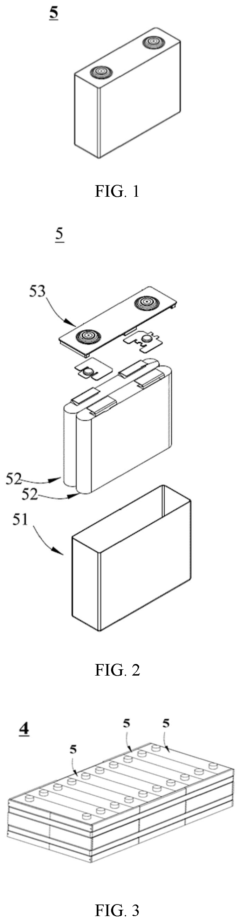

This application does not have particular limitations on the shape of the battery cell, and the battery cell may be cylindrical, rectangular, or of any other shape. For example, FIG. 1 is a battery cell 5 with a rectangular structure as an example.

In some embodiments, referring to FIG. 2, the outer package may include a housing 51 and a cover plate 53. The housing 51 may include a bottom plate and side plates connected to the bottom plate, and the bottom plate and the side plate enclose an accommodating cavity. The housing 51 has an opening in communication with the accommodating cavity. The cover plate 53 can cover the opening to seal the accommodating cavity. The positive electrode sheet, the negative electrode sheet, and the separator can form an electrode assembly 52 through a winding process or a lamination process. The electrode assembly 52 is encapsulated in the accommodating cavity. The electrolyte infiltrates into the electrode assembly 52. One or more electrode assemblies 52 may be included in the battery cell 5, which may be selected by those skilled in the art according to specific actual needs.

In some embodiments, the battery cell may be assembled into a battery module. One or more battery cells may be included in the battery module. The specific quantity may be chosen by those skilled in the art based on use and capacity of the battery module.

FIG. 3 is a battery module 4 as an example. Referring to FIG. 3, in the battery module 4, a plurality of battery cells 5 may be arranged in sequence along a length direction of the battery module 4. Certainly, the battery cells 5 may alternatively be arranged in any other manner. Further, the plurality of battery cells 5 may be fixed by fasteners.

Optionally, the battery module 4 may further include an enclosure with an accommodating space, and the plurality of battery cells 5 are accommodated in the accommodating space.

In some embodiments, the above battery module may alternatively be assembled into a battery pack, and one or more battery modules are included in the battery pack. The specific quantity may be chosen by those skilled in the art based on use and capacity of the battery pack.

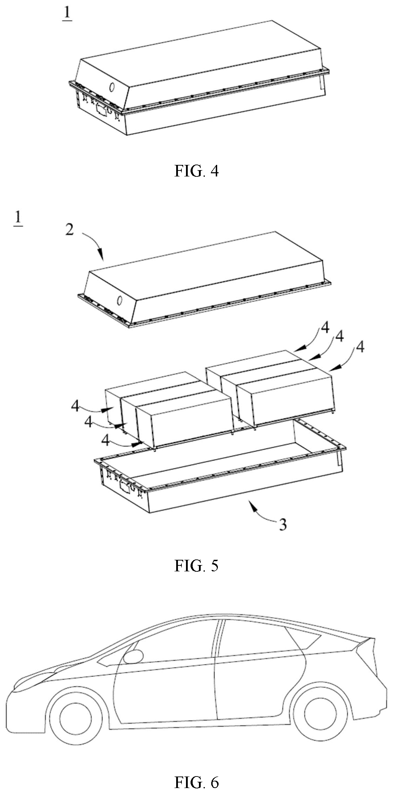

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box body 2 and a lower box body 3. The upper box body 2 can cover the lower box body 3 to form a sealed space for accommodating the battery modules 4. The plurality of battery modules 4 may be arranged in the battery box in any manner.

In addition, this application further provides an electric apparatus. The electric apparatus includes at least one of the battery cell, the battery module, or the battery pack provided by this application. The battery cell, the battery module, or the battery pack can be used as a power source for the electric apparatus, and can also be used as an energy storage unit for the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

As an electric apparatus, the battery cell, the battery module, or the battery pack may be selected according to its use requirements.

FIG. 6 is an electric apparatus as an example. The electric apparatus is a battery electric vehicle, a hybrid electric vehicle, or a plug-in hybrid electric vehicle, etc. To meet the requirements of the electric apparatus for high power and high energy density of the battery cell, a battery pack or a battery module may be used.

### [Examples]

Examples of this application are described below. The examples described below are exemplary and are only used to explain this application, and cannot be understood as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Example 1

### (1) Preparation of positive electrode material:

15.081 kg of FePO₄, 3.694 kg of Li₂CO₃, 0.425 kg of glucose, 0.200 kg of PEG 6000, 0.127 kg of Ketjen black, 0.280 kg of tetrabutyl titanate, and 10 L of water were added to a 50 L stainless steel stirring mill and ball-milled at 25°C at 1000 rpm for 1 h to obtain a ball-milled mixed liquid, where a particle size Dᵥ50 of insoluble particles in the ball-milled mixed liquid was 4±0.20 µm.

The ball-milled mixed liquid was transferred to a sand mill and sand-milled at 25°C at 8000 rpm for 1 h to obtain a sand-milled mixed liquid, where a particle size Dᵥ50 of insoluble particles in the sand-milled mixed liquid was 0.50±0.20 µm.

The sand-milled mixed liquid was spray-dried, where during the spray drying process, an inlet air temperature was 300°C and an outlet air temperature was 200°C. Then, dry powder was obtained.

The dry powder was placed in a tube furnace, uniformly heated for 6 hours to 780°C in a nitrogen atmosphere, and then sintered at 780°C for 6 hours. The sintered material was crushed by gas crushing, and a particle size Dᵥ50 of the crushed material was controlled to be 1 µm to obtain a positive electrode material.

(2) Preparation of positive electrode sheet: The positive electrode material, a binder polyvinylidene fluoride (PVDF), and a conductive agent carbon black were dissolved in a solvent N-methylpyrrolidone (NMP) at a mass ratio of 90:5:5, and fully stirred and mixed to prepare a positive electrode slurry. The positive electrode slurry was uniformly applied on a positive electrode current collector aluminum foil, followed by drying, cold pressing, and cutting to obtain a positive electrode sheet.

(3) Negative electrode sheet: metal lithium sheet.

(4) Separator: A Celgard2400 microporous polyethylene film was used.

(5) Preparation of electrolyte: Ethylene carbonate (EC) and dimethyl carbonate (DMC) were mixed at a volume ratio of 1:1, and then LiPF₆ was uniformly dissolved in the above solution to obtain an electrolyte. In the electrolyte, a concentration of LiPF₆ was 1 mol/L.

(6) Preparation of button battery:

In a glove box protected by argon, the positive electrode sheet, the negative electrode sheet, the separator, and the electrolyte were assembled into a button battery.

Preparation methods of secondary batteries of Examples 2 to 18 and Comparative Examples 1 to 4 were similar to that of Example 1. Different preparation parameters were shown in Table 1, where the weight ratio of the organic carbon source to the inorganic carbon source was the same as that in Example 1.

**Table 1: Preparation methods of Examples 1 to 18 and Comparative Examples 1 to 4**

| No. | Source of M element | Molar ratio of lithium element in lithium source to iron element in iron source | Molar ratio of iron element in iron source to phosphorus element in phosphorus source | Molar ratio of M element in source of M element to iron element in iron source | Weight ratio of small-molecule organic carbon source to medium-molecule/macromolecular organic carbon source | Inorganic carbon source | Weight ratio of inorganic carbon source to iron element in iron source | Dᵥ50 of insoluble particles in ball-milled material (µm) | Dᵥ50 of insoluble particles in mixture (µm) | Average particle size of granulated particles (mm) | Sintering heating time | Sintering temperature and time |
|---|---|---|---|---|---|---|---|---|---|---|---|---|
| Example 1 | N-butyl titanate | 1.032 | 0.965 | 8.4:1000 | Glucose/PEG 6000=1:3 | Ketjen black | 1:172.5 | 3.8-4.2 | 0.50 | 3 | 6 h | 780°C, 8 h |
| Example 2 | N-butyl titanate | 1.032 | 0.965 | 8.4:1000 | Glucose/PEG 6000=1:0.5 | Ketjen black | 1:172.5 | 3.8-4.2 | 0.50 | 3 | 6 h | 780°C, 8 h |
| Example 3 | N-butyl titanate | 1.032 | 0.965 | 8.4:1000 | Glucose/PEG 6000=1:8 | Ketjen black | 1:172.5 | 3.8-4.2 | 0.50 | 3 | 6 h | 780°C, 8 h |
| Example 4 | N-butyl titanate | 1.032 | 0.96 | 8.4:1000 | Glucose/PEG 6000=1:3 | Ketjen black | 1:172.5 | 3.8-4.2 | 0.50 | 3 | 6 h | 780°C, 8 h |
| Example 5 | N-butyl titanate | 1.032 | 0.965 | 8.4:1000 | Glucose/PEG 6000=1:3 | Ketjen black | 1:172.5 | 4.6-5.0 | 0.40 | 3 | 6 h | 780°C, 8 h |
| Example 6 | N-butyl titanate | 1.032 | 0.965 | 8.4:1000 | Glucose/PEG 6000=1:3 | Ketjen black | 1.3:172.5 | 3.8-4.2 | 0.50 | 3 | 6 h | 780°C, 8 h |
| Example 7 | N-butyl titanate | 1.032 | 0.965 | 8.4:1000 | Glucose/PEG 6000=1:3 | Ketjen black | 1:172.5 | 3.8-4.2 | 0.5 | 3 | 3 h | 780°C, 8 h |
| Example 8 | N-butyl titanate | 1.032 | 0.965 | 8.4:1000 | Glucose/PEG 6000=1:3 | Ketjen black | 1:172.5 | 3.8-4.2 | 0.5 | 3 | 9 h | 780°C, 8 h |
| Example 9 | N-butyl titanate | 1.032 | 0.965 | 8.4:1000 | Glucose/PEG 6000=1:3 | Ketjen black | 1:172.5 | 3.8-4.2 | 0.5 | 3 | 6 h | 600°C, 10 h |
| Example 10 | N-butyl titanate | 1.032 | 0.965 | 8.4:1000 | Glucose/PEG 6000=1:3 | Ketjen black | 1:172.5 | 3.8-4.2 | 0.5 | 3 | 6 h | 800°C, 5 h |
| Example 11 | Niobium ethoxide | 1.032 | 0.965 | 8.4:1000 | Glucose/PEG 6000=1:3 | Ketjen black | 1:172.5 | 3.8-4.2 | 0.50 | 3 | 6 h | 780°C, 8 h |
| Example 12 | Magnesium nitrate | 1.032 | 0.965 | 8.4:1000 | Glucose/PEG 6000=1:3 | Ketjen black | 1:172.5 | 3.8-4.2 | 0.50 | 3 | 6 h | 780°C, 8 h |
| Example 13 | N-butyl titanate | 1.032 | 0.965 | 8.4:1000 | Glucose/PEG 6000=1:4 | Ketjen black | 1.45:172.5 | 3.8-4.2 | 0.5 | 3 | 6 h | 780°C, 8 h |
| Example 14 | N-butyl titanate | 1.032 | 0.965 | 8.4:1000 | Glucose/PEG 6000=1:3 | Ketjen black | 1:172.5 | 3.8-4.2 | 0.85 | 3 | 6 h | 780°C, 8 h |
| Example 15 | N-butyl titanate | 1.032 | 0.965 | 2.1:1000 | Glucose/PEG 6000=1:3 | Ketjen black | 1:172.5 | 3.8-4.2 | 0.50 | 3 | 6h | 750°C, 8 h |
| Example 16 | N-butyl titanate | 1.032 | 0.965 | 8.4:1000 | Glucose/PEG 6000=1:3 | Ketjen black | 1:345 | 3.8-4.2 | 0.85 | 3 | 6 h | 780°C, 8 h |
| Example 17 | N-butyl titanate | 1.032 | 0.965 | 1:1000 | Glucose/PEG 6000=1:0.5 | Ketjen black | 1:172.5 | 3.8-4.2 | 0.45 | 3 | 6 h | 780°C, 8 h |
| Example 18 | N-butyl titanate | 1.032 | 0.965 | 8.4:1000 | Glucose/PEG 6000=1:3 | Ketjen black | 1:172.5 | 3.8-4.2 | 0.50 | No granulation | 2.5 h | 780°C, 8 h |
| Comparative Example 1 | N-butyl titanate | 1.032 | 0.965 | 8.4:1000 | Glucose/PEG 6000=1:3 | Ketjen black | 1:172.5 | 3.8-4.2 | 0.3 | 3 | 6 h | 780°C, 8 h |
| Comparative Example 2 | N-butyl titanate | 1.032 | 0.965 | 8.4:1000 | Glucose/PEG 6000=1:3 | Ketjen black | 1:172.5 | 3.8-4.2 | 0.5 | 3 | 6 h | 580°C, 8 h |
| Comparative Example 3 | N-butyl titanate | 1.032 | 0.965 | 8.4:1000 | Glucose/PEG 6000=1:3 | Ketjen black | 0.8:172.5 | 3.8-4.2 | 0.50 | 3 | 6 h | 780°C, 8 h |
| Comparative Example 4 | N-butyl titanate | 1.032 | 0.965 | 8.4:1000 | Glucose/PEG 6000=1:3 | / | 0 | 3.8-4.2 | 0.50 | 3 | 6 h | 780°C, 8 h |

### Material test and battery test

### (1) Test of core chemical formula and test of carbon content:

The positive electrode material was weighed and added to a 100 mL beaker, and 10 mL of 10 %w/w nitric acid solution was added. The resulting solution was heated and digested at 120°C for 0.5 hours, and diluted to a specified volume with a 100 mL volumetric flask; and 1 mL of the solution was pipetted into a 100 mL volumetric flask and diluted to a specified volume to obtain a solution under test.

An inductively coupled plasma optical emission spectrometer (ICP-OES, instrument brand: Agilent 5800) was used to test the contents of lithium, iron, phosphorus, oxygen, and doping elements in the solution under test, then an element proportion in the material was calculated, and a chemical formula was determined.

0.1 g of the positive electrode material was weighed and mixed with 1.5 g of flux metal tungsten particles. Then, the resulting mixture was placed in a high-frequency infrared carbon-sulfur analyzer and then sintered. Then, a weight percentage of carbon in the positive electrode material was tested.

### (2) Test of powder resistivity:

With reference to the national standard GB/T 33822-2017, a powder resistivity meter (Suzhou Jingge, ST2722 type) was used. 1 g of the sample (error within ±0.005 g) was weighed and added to a feeding chamber. A pressure of 8 MPa was applied, a forward resistivity and reverse resistivity of the sample were tested respectively, and an average value of the two was taken as the powder resistivity of the sample.

### (3) Test of BET specific surface area:

With reference to GB/T 19587-2017, a specific surface area analyzer (TRISTAR 302 type) was used for testing. An appropriate amount of sample was loaded into a special sample tube, heated, vacuumed, degassed for 2 h, and then cooled to room temperature. Then, a total weight was measured. A sample mass was obtained by subtracting the mass of the sample tube from the total weight. The sample tube containing the sample was placed in a workstation, where an adsorption gas was nitrogen, relative adsorption pressure points were 0.05/0.10/0.15/0.20/0.25/0.30, an equilibrium time was 5s, and a testing atmosphere was high-purity liquid nitrogen. Adsorption amount of gas on a solid surface under different relative adsorption pressures was tested, and the analyzer was used for automatically calculating the BET specific surface area based on the BET multilayer adsorption theory and formula.

### (4) Test of iron dissolution amount:

5.00 g of positive electrode material powder was weighed and added to a 250 mL beaker, with an accuracy to 0.01 g. 100 mL of 0.01 mol/L hydrochloric acid solution was added with a graduated cylinder, a stirring magnet was added, and the beaker was sealed with a sealing film and stirred at 1200 r/min for 30 min. Then, the beaker was placed in a 25°C constant-temperature water bath, sealed, and left standing for 2 h. About 10 mL of supernatant liquid was quickly sucked up with a disposable syringe and quickly filtered with a 0.22 µm needle-type microporous filter head. A concentration of Fe element in the filtrate was tested with ICP-OES, and a total weight of the iron element in the solution in the beaker was calculated and then divided by the weight of the positive electrode material to obtain the iron dissolution amount of the positive electrode material per gram in 100 mL hydrochloric acid solution.

### (5) Test of polydispersity index PDI value of primary particle size distribution:

An argon ion beam was used to cut perpendicular to the surface of the positive electrode sheet, a cross section was photographed with a scanning electron microscope, particle sizes of primary particles with a particle size greater than 50 nm were statistically analyzed, and the PDI was calculated according to the following formula; where an average particle size *x̅* was the sum of particle sizes of primary particles divided by the number of primary particles.$PDI = σ / \overline{x}$$σ = \sqrt{\frac{{\sum }_{i = 1}^{n} {\left({x}_{i}-\overline{x}\right)}^{2}}{n}}$

*σ* was the standard deviation of the particle size, *x̅* was the average particle size, *xᵢ* was the particle size value of the primary particles, and n was the total number of primary particles counted.

(6) Test of particle size Dᵥ50 of positive electrode material and particle size Dᵥ50 of insoluble particles in mixture or ball-milled material:
0.1 g of the positive electrode material, the mixture, or the ball-milled material was taken, 1% special dispersant and 20 mL of deionized water were added, ultrasonic treatment was performed for 5 minutes (at 53 KHz and 120 W) to completely disperse the sample, and a sample concentration ensured that a light obscuration was 8-12%. A laser particle size analyzer (MasterSizer 3000) was used to test the particle size Dᵥ50 of the particles, where test parameters were as follows: a refractive index was 1.692, an absorption rate was 1.0, a test time was 6s, the number of snaps was 6000, and the number of test cycles was 3.

(7) An average particle size of granulated particles was tested using a long-diameter statistical method.

(8) Test of compacted density:
1 g of sample powder was weighed and placed in a compacted density mold, and the compacted density mold was then placed in a compacted density machine. A compacted density was tested after compacted with a pressure of 221.55 MPa.

(9) SEM test: SEM was used to test the positive electrode material.

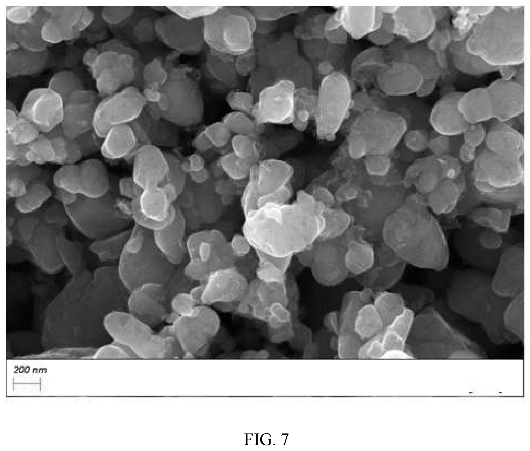

An SEM image of the positive electrode material of Example 1 was shown in FIG. 7.

(10) Test method for cycling performance:
The battery was placed in a 25°C oven and left standing for 2 h, where the battery temperature was maintained at 25°C. Then, the battery was charged at a constant current of 1C to 3.65 V and continuously charged at a constant voltage until the charging current was less than 0.05C. Then, the battery was left standing for 5 min and then discharged at a constant current of 1C to 2.5 V. A discharge capacity was tested. This was one charge-discharge cycle. After a pause of 5 min, the above operations were repeated continuously. The number of cycles when the battery capacity decayed to 80% of the first-cycle discharge capacity was tested.

The above results were shown in Table 2.

**Table 2: Performance test results of Examples 1 to 18 and Comparative Examples 1 to 4**

| No. | Core chemical formula | Coating layer | Powder resistivity (Ω·cm) | BET specific surface area (m²/g) | Iron dissolution amount (ppm) | PDI value | Weight percentage of carbon (%) | Weight percentage of M element in positive electrode material | Particle size Dᵥ50 (µm) | Compacted density (g/cm³) | Cycling performance |
|---|---|---|---|---|---|---|---|---|---|---|---|
| Example 1 | Li_{1.01}Ti_{0.008}Fe_{0.979}PO₄ | Carbon and titanium element | 10 | 10.5 | 10 | 0.35 | 1.34 | 2500 ppm | 1 | 2.413 | 5468 |
| Example 2 | Li_{1.01}Ti_{0.008}Fe_{0.979}PO₄ | Carbon and titanium element | 18 | 12.5 | 30 | 0.35 | 1.39 | 2500 ppm | 1 | 2.403 | 4746 |
| Example 3 | Li_{1.01}Ti_{0.008}Fe_{0.979}PO₄ | Carbon and titanium element | 8 | 9.5 | 20 | 0.35 | 1.32 | 2500 ppm | 1 | 2.413 | 5445 |
| Example 4 | Li_{1.01}Ti_{0.008}Fe_{0.979}PO₄ | Carbon and titanium element | 15 | 6 | 45 | 0.39 | 1.38 | 2500 ppm | 1 | 2.45 | 4991 |
| Example 5 | Li_{1.01}Ti_{0.008}Fe_{0.979}PO₄ | Carbon and titanium element | 10 | 10.8 | 14 | 0.4 | 1.35 | 2500 ppm | 1 | 2.433 | 5376 |
| Example 6 | Li_{1.01}Ti_{0.008}Fe_{0.979}PO₄ | Carbon and titanium element | 8 | 14 | 14 | 0.38 | 2.00 | 2500 ppm | 1 | 2.343 | 5372 |
| Example 7 | Li_{1.01}Ti_{0.008}Fe_{0.979}PO₄ | Carbon and titanium element | 19 | 14 | 42 | 0.38 | 1.32 | 2500 ppm | 1 | 2.413 | 4382 |
| Example 8 | Li_{1.01}Ti_{0.008}Fe_{0.979}PO₄ | Carbon and titanium element | 11 | 10.5 | 9 | 0.35 | 1.34 | 2500 ppm | 1 | 2.421 | 5441 |
| Example 9 | Li_{1.01}Ti_{0.008}Fe_{0.979}PO₄ | Carbon and titanium element | 12 | 11.5 | 12 | 0.36 | 1.32 | 2500 ppm | 1 | 2.423 | 5311 |
| Example 10 | Li_{1.01}Ti_{0.008}Fe_{0.979}PO₄ | Carbon and titanium element | 18 | 13.5 | 15 | 0.36 | 1.38 | 2500 ppm | 1 | 2.38 | 4871 |
| Example 11 | Li_{1.01}Nb_{0.008}Fe_{0.977}PO₄ | Carbon and niobium element | 9.8 | 10.2 | 11 | 0.35 | 1.35 | 2500 ppm | 1 | 2.42 | 5473 |
| Example 12 | Li_{1.01}Mg_{0.008}Fe_{0.981}PO₄ | Carbon and magnesium element | 10.2 | 10.3 | 12 | 0.35 | 1.33 | 2500 ppm | 1 | 2.412 | 5441 |
| Example 13 | Li_{1.01}Ti_{0.008}Fe_{0.979}PO₄ | Carbon and titanium element | 15 | 15.2 | 21 | 0.39 | 2.20 | 2500 ppm | 1 | 2.356 | 4896 |
| Example 14 | Li_{1.01}Ti_{0.008}Fe_{0.979}PO₄ | Carbon and titanium element | 18 | 9.2 | 13 | 0.34 | 1.33 | 2500 ppm | 1 | 2.335 | 5202 |
| Example 15 | Li_{1.01}Ti_{0.002}Fe_{0.991}PO₄ | Carbon and titanium element | 11 | 10.6 | 16 | 0.34 | 1.35 | 625 ppm | 1 | 2.413 | 4850 |
| Example 16 | Li_{1.01}Ti_{0.008}Fe_{0.979}PO₄ | Carbon and titanium element | 20 | 12.2 | 25 | 0.35 | 1.34 | 2500 ppm | 1 | 2.413 | 4740 |
| Example 17 | Li_{1.01}Ti_{0.001}Fe_{0.996}PO₄ | Carbon and titanium element | 19 | 13.5 | 55 | 0.355 | 1.20 | 297 ppm | 1 | 2.41 | 4283 |
| Example 18 | Li_{1.01}Ti_{0.008}Fe_{0.979}PO₄ | Carbon and titanium element | 16 | 14.1 | 50 | 0.87 | 1.34 | 2500 ppm | 1 | 2.413 | 3889 |
| Comparative Example 1 | Li_{1.01}Ti_{0.008}Fe_{0.979}PO₄ | Carbon and titanium element | 26 | 13.5 | 48 | 0.38 | 1.34 | 2500 ppm | 1 | 2.335 | 3573 |
| Comparative Example 2 | Li_{1.01}Ti_{0.008}Fe_{0.979}PO₄ | Carbon and titanium element | 56 | 15 | 23 | 0.38 | 1.45 | 2500 ppm | 1 | 2.345 | 2475 |
| Comparative Example 3 | Li_{1.01}Ti_{0.008}Fe_{0.979}PO₄ | Carbon and titanium element | 18 | 4 | 14 | 0.37 | 1.14 | 2500 ppm | 1.2 | 2.413 | 3050 |
| Comparative Example 4 | Li_{1.01}Ti_{0.008}Fe_{0.979}PO₄ | Carbon and titanium element | 55 | 13.5 | 10 | 0.35 | 1.34 | 2500 ppm | 1 | 2.413 | 3045 |

According to the above results, it can be seen that:
As compared with Comparative Examples 1 and 4 whose powder resistivity is greater than 20 Ω·cm, the batteries of Examples 1 to 18 of this application have better cycling performance.

As compared with Comparative Example 2 whose powder resistivity is greater than 20 Ω·cm and BET specific surface area is greater than 14 m²/g, the batteries of Examples 1 to 18 of this application have better cycling performance.

As compared with Comparative Example 3 whose BET specific surface area is less than 6 m²/g, the batteries of Examples 1 to 18 of this application have better cycling performance.

As compared with Example 15 in which the content of M element in the positive electrode material is low, the batteries of Examples 1, 4, and 14 of this application have better cycling performance.

As compared with Example 16 in which the weight ratio of the inorganic carbon source to the iron element in the iron source is small when the positive electrode material was prepared, the batteries of Examples 1, 4, 6, 13, and 14 of this application have better cycling performance.

As compared with Example 17 in which the content of M element in the positive electrode material is low, the battery of Example 2 of this application has better cycling performance.

As compared with Example 18 in which no granulation is performed and the polydispersity index PDI value of the primary particle size distribution of the positive electrode material is large, the batteries of Examples 1, 4, 7, and 8 of this application have better cycling performance.

It should be noted that this application is not limited to the foregoing embodiments. The foregoing embodiments are merely examples, and embodiments having constructions substantially the same as those of the technical idea and having the same effects as the technical idea within the scope of the technical solutions of this application are all included in the technical scope of this application. In addition, without departing from the essence of this application, various modifications made to the embodiments that can be conceived by those skilled in the art, and other manners constructed by combining some of the constituent elements in the embodiments are also included in the scope of this application.

## Claims

1. A positive electrode material, comprising a core and a coating layer covering the core, wherein
the core comprises lithium iron phosphate or lithium iron phosphate containing M element, and
the coating layer comprises carbon or comprises carbon and M element;
wherein M element in the core and the coating layer independently comprises one or more elements of Group IIA, Group IIIA, Group IVA, Group IVB, and Group VB; and
the positive electrode material satisfies:
a powder resistivity at 8 MPa is less than or equal to 20 Ω·cm; and
a BET specific surface area at a liquid nitrogen temperature is 6-15.2 m²/g.

2. The positive electrode material according to claim 1, wherein the powder resistivity of the positive electrode material at 8 MPa is less than or equal to 10 Ω·cm; and/or
the BET specific surface area of the positive electrode material at the liquid nitrogen temperature is 8-11 m²/g; and/or
M element in the core and the coating layer independently comprises one or more elements of Si, Al, B, Mg, Zr, Ti, Nb, and V.

3. The positive electrode material according to claim 1 or 2, wherein
an iron dissolution amount of the positive electrode material per gram in 100 mL hydrochloric acid solution is less than or equal to 60 ppm; and/or
a polydispersity index PDI value of a primary particle size distribution of the positive electrode material is less than or equal to 0.87.

4. The positive electrode material according to any one of claims 1 to 3, wherein
an iron dissolution amount of the positive electrode material per gram in 100 mL hydrochloric acid solution is less than or equal to 55 ppm; and/or
a polydispersity index PDI value of a primary particle size distribution of the positive electrode material is less than or equal to 0.4.

5. The positive electrode material according to any one of claims 1 to 4, wherein a weight percentage of carbon in the positive electrode material is 1.2%-2.0%; and/or
a weight percentage of M element in the positive electrode material is 297 ppm-10⁴ ppm.

6. The positive electrode material according to any one of claims 1 to 5, wherein a weight percentage of M element in the positive electrode material is 10³ ppm-10⁴ ppm.

7. The positive electrode material according to any one of claims 1 to 6, wherein a particle size Dᵥ50 of the positive electrode material is 0.6-1.5 µm; and/or
a compacted density of the positive electrode material at 221.55 MPa is greater than or equal to 2.3 g/cm³.

8. A method for preparing a positive electrode material, comprising:
performing ball milling and sand milling on an iron source, a lithium source, a phosphorus source, an organic carbon source, and an inorganic carbon source in a solvent to obtain a mixture; and
drying and sintering the mixture to obtain a positive electrode material; wherein
the positive electrode material is the positive electrode material according to any one of claims 1 to 7.

9. The method according to claim 8, wherein
the organic carbon source comprises a small-molecule organic carbon source and a medium-molecule organic carbon source, or comprises a small-molecule organic carbon source and a macromolecular organic carbon source.

10. The method according to claim 9, wherein a weight ratio of the small-molecule organic carbon source to the medium-molecule organic carbon source or a weight ratio of the small-molecule organic carbon source to the macromolecular organic carbon source is (1:9) to (9:1); and/or
a weight-average molecular weight of the medium-molecule organic carbon source is greater than 500 and less than or equal to 2000; and/or
a weight-average molecular weight of the macromolecular organic carbon source is greater than 2000 and less than or equal to 1000000; and/or
the inorganic carbon source comprises one or more of acetylene black, Ketjen black, graphite oxide, graphene, and carbon nanotubes.

11. The method according to any one of claims 8 to 10, wherein in the step of preparing the mixture, the iron source, the lithium source, the phosphorus source, the organic carbon source, the inorganic carbon source, and a source of M element are ball-milled and sand-milled in the solvent to obtain the mixture.

12. The method according to any one of claims 8 to 11, wherein a weight ratio of the inorganic carbon source to the iron element in the iron source is (1:50) to (1:345).

13. The method according to any one of claims 8 to 12, wherein a particle size Dᵥ50 of insoluble particles in the mixture is 0.40-0.85 µm; and/or
a temperature of the sand milling is 25°C-35°C; and/or
a time of the sand milling is 0.5-4 hours; and/or
the sand milling is performed at a rotation speed of 5000-10000 rpm.

14. The method according to any one of claims 8 to 13, wherein the method further comprises: before sintering, granulating the dried mixture to obtain particles, wherein an average particle size of the particles is 2 mm-10 mm; and/or
the method further comprises: after sintering, crushing a sintered product to obtain a positive electrode material.

15. The method according to any one of claims 8 to 14, wherein after drying or after granulation, the temperature is raised to a sintering temperature at a constant rate in 2.5-9 hours; and/or
the sintering temperature is 600°C-800°C; and/or
a time of the sintering is 5-10 hours; and/or
the temperature is raised and the sintering is performed in a reducing atmosphere; and/or
a volume percentage of a reducing gas in the reducing atmosphere is 2%-8%.

16. The method according to any one of claims 8 to 15, wherein a molar ratio of the iron element in the iron source to the phosphorus element in the phosphorus source is 0.96-0.98; and/or
a molar ratio of the lithium element in the lithium source to the iron element in the iron source is 1.015-1.045; and/or
a molar ratio of M element to the iron element in the iron source is (1:1000) to (3:100); and/or
a particle size Dᵥ50 of insoluble particles in a ball-milled material is 2.0-5.0 µm.

17. A positive electrode sheet, comprising the positive electrode material according to any one of claims 1 to 7 or a positive electrode material prepared using the method according to any one of claims 8 to 16.

18. A battery, comprising the positive electrode material according to any one of claims 1 to 7, a positive electrode material prepared using the method according to any one of claims 8 to 16, or the positive electrode sheet according to claim 17.

19. An electric apparatus, comprising the battery according to claim 18.
